# EUROPEAN PATENT APPLICATION

(11) **EP 2 386 467 A2**
(43) Date of publication of application: **16.11.2011**
(21) Application number: 11396003.3
(22) Date of filing: 11.05.2011
(51) Int. Cl.: B62D 33/02

(54) **Method for manufacturing a frame structure of a utility vehicle and corresponding frame structure**

(30) Priority: 12.05.2010 FI 20100208
(71) Applicant: Erhomet Oy, 21500 Piikkiö (FI)
(72) Inventor: Weckström, Ari, 20100 Turku (FI)
(74) Representative: Pirhonen, Kari Lennart

(57) **Abstract**

The vehicle body structure is manufactured so that the body structure is manufactured from profile beams (21, 22, 23) provided with panel grooves (27) to which panels (30) are connected, and the profile beams (21, 22, 23) are connected to one another with bolt grooves (26) located in them and with bolts (25) and nuts. The body structure includes a connecting element (24) with which two profile beams (21, 22, 23) are connected to one another using bolt grooves (26), bolts (25) and nuts.

## Description

### OBJECT OF THE INVENTION

The object of the invention is a method for manufacturing a vehicle body structure and a vehicle body structure Vehicle in this context, among other things, refers to fire engines, tank vehicles, lorries, buses and trailers. A vehicle body structure usually includes beams and plates attached to them. In that case, the plates connected to the beams are either outer cladding panels, or cabinets or lockers intended for storing or transporting goods. Fire engines in particular are vehicles that are equipped with various opening cabinets and lockers, requiring a high number of cladding panels, partition panels and doors.

### PRIOR ART

Known vehicle body structures are very largely made by hand, usually by welding beams together to form a body skeleton, to which plates are fastened with screws or rivets. In these circumstances, manufacturing is slow and costly- In the case of fire engines, in particular, there is the additional drawback that it is difficult to connect fasteners for materials needed in firefighting to the known body structures.

### PURPOSE OF THE INVENTION

The purpose of this invention is to create a method for manufacturing a vehicle body structure that overcomes the above-mentioned drawbacks. Further, the purpose of the invention is to create a new method of manufacturing that is more efficient than the known methods.

### CHARACTERISTICS OF THE METHOD ACCORDING TO THE INVENTION

The method according to the invention is characterized in
- that the vehicle body structure is manufactured using profile beams provided with panel grooves to which the panels are connected, and
- that the profile beams are connected to one another with the bolt grooves located in them and with bolts and nuts.

According to the invention, the vehicle body structure is formed from special profile beams that have been designed to allow for the replacement of several work steps and to allow for the frame parts and cladding panels of the body structure to be easily fastened to one another. Using the profiles, the cladding and interior panels are also easily and quickly fastened to the frame parts. In addition, all fire engine equipment can be fastened to the frame parts without drilling. The equipment spaces of fire-extinguishing vehicles and tank vehicles can be made entirely from profiles that have been specially designed for use in fire engines- In that case, an auxiliary frame fastened to the vehicle frame is most preferably installed on top of the frame of the tank vehicle and/or extinguishing vehicle. The special profiles are fastened to the auxiliary frame.

### EMBODIMENTS OF THE METHOD ACCORDING TO THE INVENTION

A preferred embodiment of the method according to the invention is characterized in that two profile beams are connected to one another with a connecting element which is fastened to the bolt grooves of both profile beams with bolts and nuts.

Another preferred embodiment of the method according to the invention is characterized in that shelves or objects needed in the vehicle are connected to the bolt grooves of the profile beams with bolts and nuts.

Another preferred embodiment of the method according to the invention is characterized in that two adjacent vertical profile beams are provided with roller-door grooves to which a roller door is connected.

### BODY STRUCTURE ACCORDING TO THE INVENTION

The object of the invention is also a vehicle body structure. The body structure according to the invention is characterized in that the body structure includes profile beams provided with panel grooves for panels to be connected to them and bolt grooves for fastening bolts and/or nuts.

With the profile beams provided with grooves, it is easy to adapt the length, depth and height of the vehicle body. In addition, the body is easily adaptable afterwards, if the equipment to be placed in the equipment spaces changes or switches places. Thanks to the profile beams, all of the shelves of the vehicle body can also be easily raised and lowered. This has been achieved by adding to the corner of each quadrangular shelf a special vertical profile provided with a groove for a nut and/or bolt. In that case, the shelf can be raised or lowered very quickly by loosening the fastening bolt and moving it in the groove to a suitable spot.

### EMBODIMENTS OF THE BODY STRUCTURE ACCORDING TO THE INVENTION

A preferred embodiment of the body structure according to the invention is characterized in
- that the body structure includes a connecting element to allow for two profile beams to be connected to one another, and
- that the connecting element can be connected, with bolts and nuts, to the bolt grooves of both profile beams that are to be connected.

Another preferred embodiment of the body structure according to the invention is characterized in that the profile beam_{'}s bolt groove and the bolt and/or nut connected to it form a fastener for a shelf or a fastener for an object needed in the vehicle.

A third preferred embodiment of the body structure according to the invention is characterized in that a vertical profile beam is provided with a roller-door groove to which a roller door can be connected.

### EXAMPLES OF EMBODIMENTS

In the following, the invention is described using examples with reference to the appended drawings, in which

### LIST OF FIGURES

- Fig. 1: is a perspective view of a vehicle with a body structure frame skeleton assembled from profile beams according to the invention.
- Fig. 2: is a perspective view of an assembly phase of the vehicle body structure frame skeleton, wherein the body structure's cabinets are formed from profile beams according to the invention and their connectable panels.
- Fig. 3: is a cross-sectional view of the profile beam according to one embodiment of the invention.
- Fig. 4: is a cross-sectional view of the profile beam according to another embodiment of the invention.
- Fig. 5: is a cross-sectional view of the profile beam according to a third embodiment of the invention.
- Fig. 6: is a perspective view of the connection of the profile beams of a frame skeleton according to the invention.
- Fig. 7: is a horizontal sectional view of a detail of one frame skeleton according to the invention.
- Fig. 8: is a cross-sectional view of another embodiment of the profile beam of Fig. 3.
- Fig. 9: is a cross-sectional view of another embodiment of the profile beam of Fig. 4.
- Fig. 10: is a cross-sectional view of a doorsill profile.
- Fig. 11: is a cross-seotional view of another embodiment of the corner profile.
- Fig. 12: is a cross-sectional view of a centre profile.
- Fig. 13: is a cross-sectional view of another embodiment of the centre profile of Fig. 12.
- Fig. 14: is a cross-sectional view of a third embodiment of the centre profile of Fig. 12.
- Fig. 15: is a cross-sectional view of a T profile.
- Fig. 16: is a cross-sectional view of a lateral transfer profile.
- Fig. 17: is a schematic top view of a fire engine skeleton.

### DESCRIPTION OF THE FIGURES

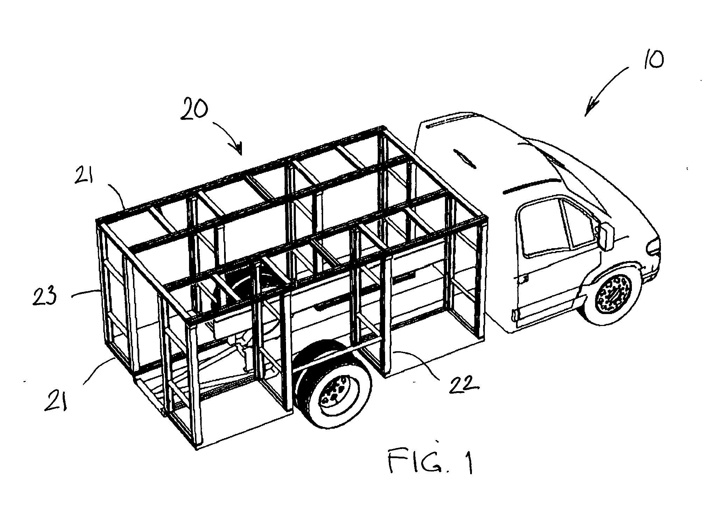

Fig. 1 shows a vehicle 10, the body structure frame skeleton 20 of which has been assembled from profile beams 21-23 according to the invention. In this embodiment, frame profile beams 21 have been used in the floor and the roof, and door profile beams 22 and corner profile beams 23 have been used in the wall structures. All profile beams 21-23 have grooves for fastening bolts and grooves for panels. In addition, the door profile beams 22 and the corner profile beams 23 have special grooves for roller doors. The structure and use of the profile beams 21-3 and their grooves will be explained in more detail below.

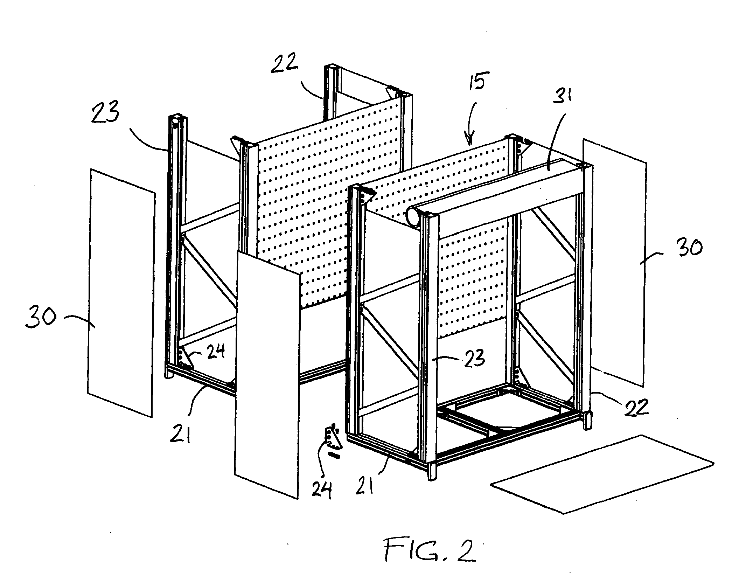

Fig. 2 shows a fire engine body structure assembly stage, wherein the cabinets 15 to be included in the body structure are made from profile beams 21-23 according to the invention and their connectable panels 30. The floor has frame profile beams 21 and the wall structures have door profile beams 22 and corner profile beams 23. The doors of the cabinets 15 are roller doors 31, whereby the door profile beams 22 and corner profile beams 23 have grooves for them. The corner profile beam 23 only has a groove for the roller door 31 on one side, but the door profile beam 22 has grooves for the roller door 31 on both sides, so that cabinets 15 equipped with a roller door 31 can be located on both sides of it. Fig. 2 also illustrates triangular connecting elements 24, through which the beams 21-23 are connected to one another using a bolt connection.

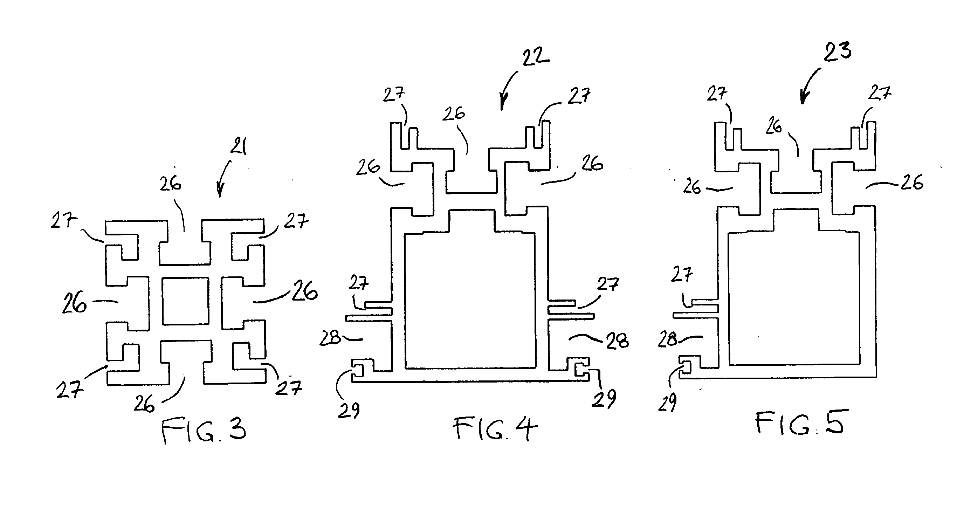

Fig. 3 shows the cross section of the profile beam according to one embodiment of the invention. This beam is a frame profile beam 21 which has bolt grooves 26 on all four sides. By connecting frame profile beams 21 to one another through connecting elements 24 at the bolt grooves 26 located on the sides of the beams, a floor or roof skeleton is achieved. The floor skeleton formed from frame profile beams 21 can be fastened on top of the auxiliary frame of the vehicle 10 at the bolt grooves 26 located under the beams 21, and the wall structure_{'}s door profile beams 22 and corner profile beams 23 are connected to the bolt grooves 26 located on top of the beams 21. The bolt grooves 26 located on the underside of the roof skeleton formed from frame profile beams 21 provide a fastening point for the top ends of the door profile beams 22 and corner profile beams 23. The bolt grooves 26 located on the upper side of the frame profile beams 21 in the roof skeleton remain free, and the equipment to be placed on the roof of the fire engine can be fastened to them. The frame profile beam 21 of Fig. 3 also has panel grooves 27 to which floor and/or roof cladding panels can be placed. Most preferably, the panels 30 are fastened to the panel grooves 27 by gluing, using for example a flexible sealing compound.

Fig 4 shows the cross section of the door profile beam 22 that is usually installed in a vertical position. This beam 22 has three bolt grooves 26, four panel grooves 27, two roller-door grooves 28 and two seal grooves 29. Most preferably, the centre bolt groove 26 of the door profile beam 22 is used to connect the beam 22 to the floor and roof structure beams, such as the frame profile beams 21. A shelf is fastened with bolts to the bolt grooves 26 opening up at both sides, which is fast and easy to raise and lower. This only requires loosening of the fastening bolts and re-tightening them once the shelf is at the desired height.

Wall panels 30 can be connected to all four panel grooves 27 of the door profile beam 22 of Fig. 4. Essential for the door profile beam 22 is, however, that the vehicle body structure has a vertical beam which simultaneously serves as a support beam for the frame skeleton 20, to which support beam wall panels 30 are fastened and which is provided with ready-made grooves 28 for a roller door 31 to be pulled from the top down. In that case, the installation of the roller door 31 does not require any additional tracks. They are already available in the door profile beam 22. When opening the roller door 31, the door 31 formed of horizontal slats connected to one another, moves along the groove 28 and rolls up into a roll at the top edge of the door opening. To seal the edges of the roller door 31, the door profile beam 22 of Fig. 4 additionally has seal grooves 29 for seals.

Fig- 5 shows the cross section of the vertical corner profile beam 22. This beam corresponds to the door profile beam 22 of Fig. 4 in all respects except that it has only one roller-door groove 28 and only one seal groove 29.

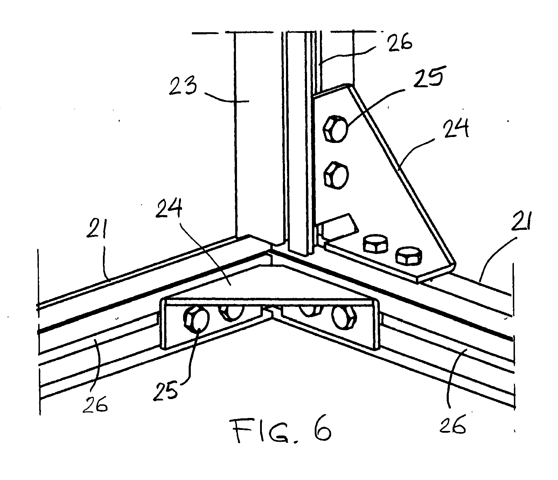

Fig. 6 shows a corner connection of the body structure frame skeleton 20, wherein three beams have been connected to one another. Fig. 6 shows that the horizontal frame profile beams 21 in the floor have been connected to one another with a triangular connecting element 24 and bolts 25. In that case, nuts which fit the bolts 25 have been placed in the bolt grooves 26 of both frame profile beams 21. The vertical corner profile beam 22 of the frame skeleton 20 has been connected to the corner formed by the frame profile beams 21 in a similar manner with another connecting element 24 and bolts 25. In that case, nuts which fit the corresponding bolts 25 have been placed in the bolt groove 26 of one of the horizontal frame profile beams 21 and in the bolt groove 26 of the vertical corner profile beam 22.

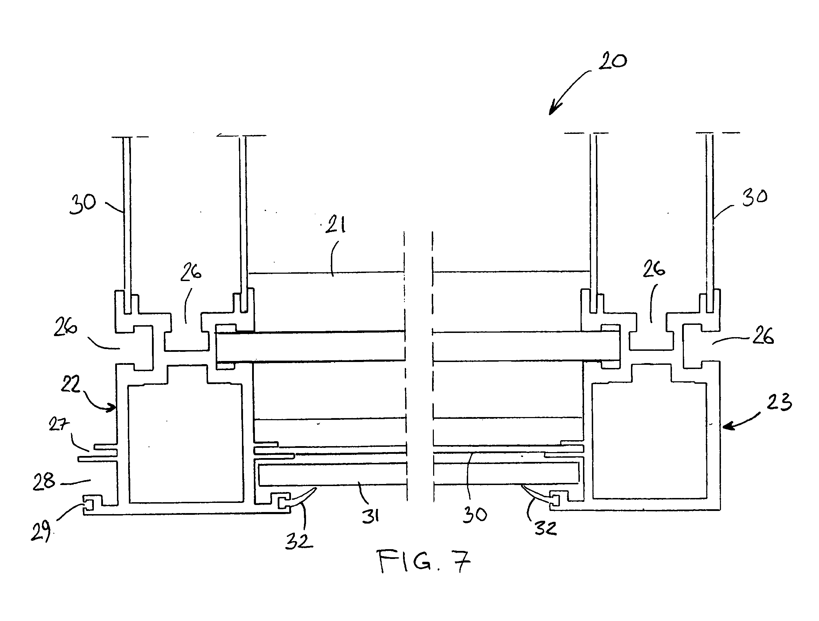

Fig. 7 shows a sectional horizontal view of the vehicle 10 body structure. Fig. 7 shows the vertical door profile beam 22 and the corner profile beam 23 located on top of the frame profile beam 21 and the roller door 31 located between them. In both beams 22 and 23, the bolt grooves 26 have been used to connect the beams to one another. In addition, wall panels 30 have been placed in the panel grooves of the beams 22 and 23. Both edges of the roller door 31 have seals 32. At the roller door 31, there is naturally no wall panel 30 covering the whole opening between the beams 22 and 23. In Fig. 7, the wall panel 30 at this location has been illustrated to present the possible alternatives where a small piece of panel can be placed at the bottom or top edge of the door opening as a seal if the roller door 31 does not cover the entire door opening.

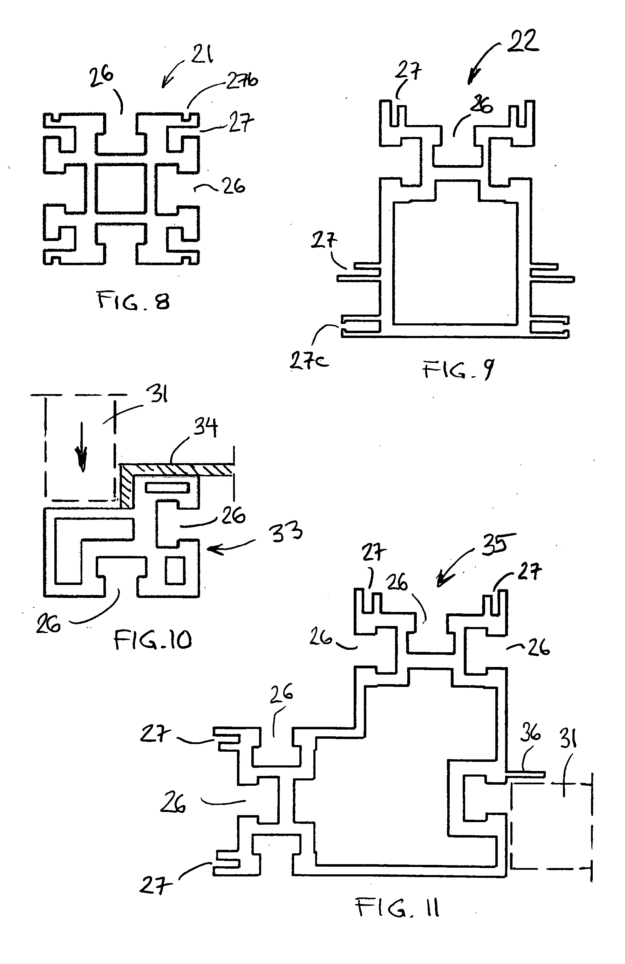

Fig. 8 shows a cross section of the frame profile 21 which has bolt grooves 26 on all four sides. The frame profile 21 has panel grooves 27 on two sides, but in this embodiment two panel grooves 27b have been added on its other two sides. In that case, all four sides of the beam formed by the frame profile 21 can be used for bolt fastening so that the beams are fastened to one another with bolts, as shown in Fig. 6, or a shelf or auxiliary equipment is added to the grooves. All four sides of the frame profile 21 additionally have two panel grooves 27 and 27b, to which the needed cladding panels are fastened. If the frame profile beam 21 is located on an outer side, usually only one cladding panel is needed, but in partition walls, for example, two panels can be used, as shown in Fig. 7.

Fig. 9 shows a cross section of another embodiment of the door profile beam 22 of Fig. 4, wherein the seal grooves have been transformed into panel grooves 27c. In that case, either a seal or a cladding panel can be connected to the panel grooves 27c when there is no roller door in this location. Alongside these there are also ordinary panel grooves 27, as also in Fig. 4. Beams corresponding to the profile beams of Fig. 4 or 9 can be used in the outer corners of the vehicle skeleton so that the panel groove 27 and the adjacent panel groove 27c located on the other side of the profile are eliminated. In that case, the corner can also be rounded if necessary.

Fig. 10 shows a cross section of the doorsill profile 33, which has a recess for the roller door 31 on its outer edge The bent edge of the floor panel 34 is connected to the recess of the doorsill profile 33. Thus the connection between the bottom edge of the roller door 31 placed in the recess and.the doorsill profile strip 33 can be made tight. Most preferably, the doorsill profile strip 33 is connected on top of the frame profile beam 21.

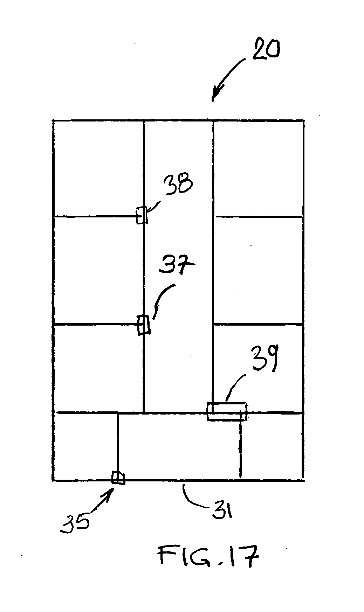

Fig. 11 shows a cross section of another embodiment of the corner profile. This profile is a door profile beam 25 which can be used when there is only one door and there is a wall on the opposite side of the door profile 35. The door profile 35 has a sealing flange 36 for the roller door 31. The bolt grooves 26 can be used, for example, for fastening shelves, and the wall panels needed are placed in the panel grooves 27. Fig. 17 shows an example of the location of the door profile beam 35.

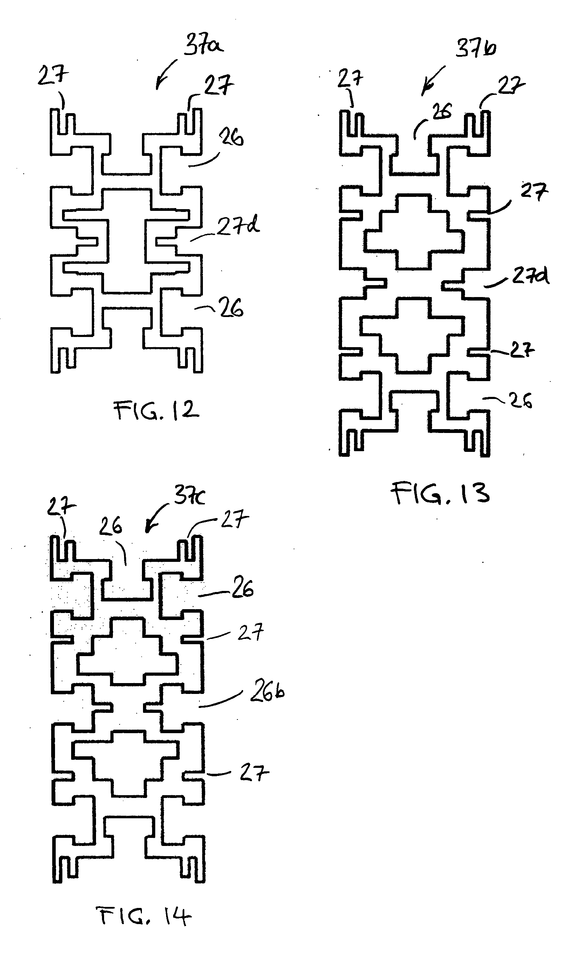

Figs. 12-14 show three different embodiments 37a, 37b and 37c of yet another profile which has been named a centre profile. Fig. 17 shows an example of the use of the centre profile 37. The centre profile 37a of Fig. 12 has, on two sides, in addition to the bolt grooves 26 and the ordinary panel grooves 27, panel grooves 27d for panels of different thicknesses. An ordinary thin aluminium panel can be connected to the panel groove 27d, but it also accepts a thicker plywood panel. Plywood panels are Used, for example, in trailers.

The centre profile 37b of Fig. 13 has bolt grooves 26, ordinary panel grooves 27 and panel grooves 27d for panels of different thicknesses. The longer side of the centre profile 37b has been extended and ordinary panel grooves 27 have been added to it in addition to the panel grooves 27d.

The centre profile 37c of Fig. 14 has further been altered so that the panel grooves located on the long sides of the profile for panels of different thicknesses have been expanded to simultaneously serve as bolt grooves. This bolt groove 26b thus also serves as a panel groove accepting two panels of different thicknesses, such as, for example, a thin aluminium panel or a thicker plywood panel. Thus the centre profile 37c is very versatile and it can be used for many different connections in the vehicle skeleton. Naturally, the bolt groove of any profile presented in this application can be altered in a similar way to also simultaneously serve as a panel groove. This significantly increases the versatility of the profiles according to the invention.

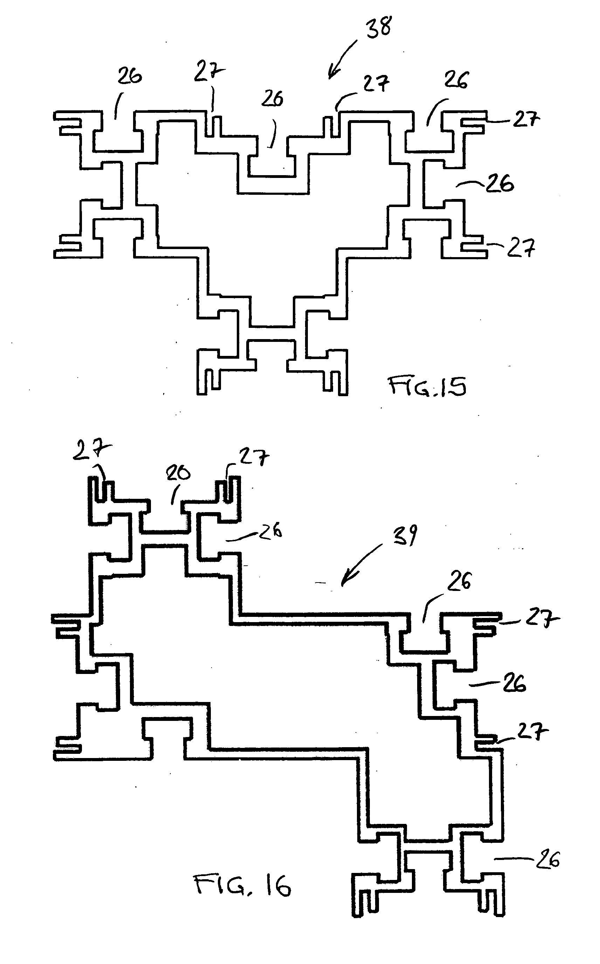

Fig. 15 shows an embodiment of the profile beam, which is a T profile beam 38. Most preferably, it can be used at the crossing point of three walls, as shown in Fig. 17. The T profile beam 38 has, on three sides, bolt grooves 26 and, on both sides of them, panel grooves 27. However, in the embodiment shown in Fig 15, the long side of the profile additionally has corresponding bolt grooves 26 and, on both sides of them, panel grooves 27. Thus the profile can also be used at the crossing point of four walls if needed. In partitions, two parallel cladding panels are often used for example where the purpose is to have an ordinary aluminium panel on one side and a perforated panel on the other side. The bolt grooves 26 are used for fastening the T profile beam 38 to the other profile; or shelves or any auxiliary equipment can be fastened to them.

Fig. 16 shows a cross section of the lateral transfer profile 39, which has bolt grooves 26 and panel grooves 27 in four different directions. However, they have not been located symmetrically in the lateral transfer profile 39, because four walls oriented in different directions do not join at the same point. The lateral transfer profile 39 of Fig. 16 shows that it has, just like the other above-mentioned profiles, a bolt groove 25 and, on both sides of it, panel grooves 27. Thus the profile beams can be easily fastened to one another and the wall has either one panel or two parallel panels.

In the lateral transfer profile 39, as in the other profiles according to the invention, it is essential that the profile beam can have, in addition to these groups, i.e. the bolt groove 25 and the panel grooves 27 located on both sides of it, also bolt grooves 25 at several points outside this group. There are no panel grooves next to these bolt grooves 25. In other words, bolt grooves 26 will remain visible in the profile beam and also in the vehicle skeleton structure, even if wall panels 30 or another panel are connected to all of the panel grooves 27 Thus there are free bolt grooves 26 available in the profile beams of the finished vehicle skeleton structure for fastening a shelf or auxiliary equipment, such as a light fixture. When a shelf has been fastened this way, its height can easily be altered afterwards. Fig. 17 shows an example of the location of the lateral transfer profile 39.

Fig. 17 shows a schematic top view of the skeleton 20 of a vehicle, such as a fire engine-Examples have been indicated in the figure on the location of different profile beams according to the invention.

### ADDITIONAL NOTES

It is obvious to a person skilled in the art that the different embodiments of the invention may vary within the scope of the claims presented below. Thus the shapes of the profiles and the number of their grooves can vary. The essential aspect is that the vehicle body structure can be easily manufactured from profiles and panels. The profile beams are most preferably extruded from aluminium, but their material or manufacturing method is not restricted The bolt grooves located in the profile beams make it easy to connect the beams to one another. These bolt grooves can, however, be utilised in a number of other ways. They can be used for fastening height-adjustable shelves and for anchoring various fasteners. The grooves can also be used directly to fasten different goods directly onto the vehicle skeleton, both on the inside and the outside. The fire engine has a high number of different accessories and equipment that need to be on-board, such as equipment lighting, induction switch etc.

### LIST OF REFERENCE NUMBERS

10 Vehicle
15 Cabinet
20 Frame skeleton
21 Frame profile beam
22 Door *profile* beam
23 Corner profile beam
24 Connecting element
25 Bolt
26 Bolt groove
27 Panel groove
27b Panel groove
27c Panel groove
27d Panel groove
28 Roller-door groove
29 Seal groove
30 Panel
31 Roller door
32 Seal
33 Doorsill profile
34 Floor panel
35 Door profile beam
36 Sealing flange
37a Centre profile beam
37b Centre profile beam
37c Centre profile beam
38 T profile beam
39 Lateral transfer profile

## Claims

1. A method for manufacturing a vehicle body structure, **characterized in**
- **that** the vehicle body structure is manufactured by using, in the body structure skeleton (20), profile beams (21, 22, 23, 33, 35. 37, 38, 38) provided with panel grooves (27) to which the panels (30) are connected, and
- **that** the profile beams (21, 22, 23, 33, 35, 37, 38, 38) are connected to one another with the bolt grooves (26) located in them and with bolts (25) and nuts.

2. A method according to claim 1, **characterized in that** two profile beams (21, 22, 23, 33, 35, 37, 38, 38) are connected to one another with a connecting element (24) which is fastened to the bolt grooves (26) of both profile beams with bolts (25) and nuts.

3. A method according to claim 1 or 2, **characterized in that** shelves or objects needed in the vehicle are connected to the bolt grooves (26) of the profile beams (21, 22, 23, 33. 35, 37, 38. 38) with bolts (25) and nuts.

4. A method according to claim 1, 2 or 3, **characterized in that** two adjacent vertical profile beams (22, 23) are provided with roller-door grooves (28) to which a roller door (31) is connected.

5. A vehicle body structure, **characterized in that** the body structure skeleton (20) includes profile beams (21, 22, 23, 33, 35, 37, 38, 38) provided with panel grooves (27) for panels (30) to be connected to them and bolt grooves (26) for fastening bolts and/or nuts.

6. A vehicle body structure according to claim 5, **characterized in**
- **that** the body structure skeleton (20) includes one or several connecting elements (24) to allow for two profile beams (21, 22, 23. 33, 35, 37, 38, 38) to be connected to one another, and
- **that** the connecting element (24) can be connected, with bolts (25) and nuts, to the bolt grooves (26) of both profile beams (21, 22. 23, 33, 35, 37, 38, 38) that are to be connected.

7. A vehicle body structure according to claim 5 or 6, **characterized in that** the profile beam_{'}s (21, 22, 23, 33, 35, 37, 38, 38) bolt groove (26) and the bolt (25) and/or nut connected to it form a fastener for a shelf or a fastener for an object needed in the vehicle.

8. A vehicle body structure according to claim 5, 6 or 7, **characterized in that** a vertical profile beam (22, 23) is provided with a roller-door groove (28) to which a roller (31) door can be connected.

9. A vehicle body structure according to any one of claims 5-8, **characterized in that** the profile beam (21, 22, 23, 33, 35, 37, 38, 38) has, on one or several sides, a similarly directed bolt groove (26) and panel grooves (27) on both sides of it.

10. A vehicle body structure according to any one of claims 5-9, **characterized in that** the profile beam (21, 22, 23, 33, 35, 37, 38, 38) has
- on one or several sides, a bolt groove (26) for fastening the profile beam or for connecting it to another profile beam,
- on both sides of the bolt groove (26), panel grooves (27) for connecting one panel or two similarly directed panels to the profile beam, and
- at least one other bolt groove (26) which remains visible in the skeleton after the panels have been connected and to which a shelf or some equipment can be fastened with a bolt.
